# EUROPÄISCHE PATENTSCHRIFT

(11) **EP 4 137 735 B1**
(45) Veröffentlichungstag und Bekanntmachung des Hinweises auf die Patenterteilung: **06.12.2023**
(21) Anmeldenummer: 21191730.7
(22) Anmeldetag: 17.08.2021
(51) Int. Cl.: F16P 3/14

(54) **ÜBERWACHUNGSEINRICHTUNG UND VERFAHREN ZUM BETRIEB EINER SENSORANORDNUNG**
MONITORING DEVICE AND METHOD FOR OPERATING A SENSOR ASSEMBLY
DISPOSITIF DE SURVEILLANCE ET PROCÉDÉ DE FONCTIONNEMENT D'UN SYSTEME CAPTEUR

(43) Veröffentlichungstag der Anmeldung: 22.02.2023
(73) Patentinhaber: Leuze electronic GmbH + Co. KG, 73277 Owen/Teck (DE)
(72) Erfinder: Brunner, Rolf, 82223 Eichenau (DE)
(74) Vertreter: Ruckh, Rainer Gerhard

(56) Entgegenhaltungen:
- US-A1- 2008 179 504

## Beschreibung

Die Erfindung betrifft eine Überwachungseinrichtung und ein Verfahren zum Betrieb einer Sensoranordnung.

Die Überwachungseinrichtung ist generell für einen Einsatz im Bereich der Sicherheitstechnik geeignet und umfasst einen Sicherheitssensor, beispielsweise einen Lichtvorhang, der typischerweise eine Reihenanordnung von Lichtstrahlen emittierenden Sendern in einem ersten Gehäuse und eine Reihenanordnung von Lichtstrahlen empfangenden Empfängern in einem zweiten Gehäuse aufweist.

Mit dem Lichtvorhang wird eine Überwachungsfunktion derart realisiert, dass in einer Auswerteeinheit des Lichtvorhangs die Empfangssignale der Empfänger ausgewertet werden und damit ein binäres Objektfeststellungssignal generiert wird, dessen Schaltzustände angeben, ob ein Objekt in einem vom Lichtvorhang überwachten Schutzfeld vorhanden ist oder nicht. Wird ein Objekt im Schutzfeld detektiert, wird durch das dadurch generierte Objektfeststellungssignal eine Sicherheitsfunktion ausgelöst, beispielsweise eine mit dem Lichtvorhang überwachte, gefahrbringende Anlage stillgesetzt.

Ein typischer Anwendungsfall für eine derartige Sensoranordnung ist die Zugangsabsicherung zu einem Gefahrenbereich einer gefahrbringenden Anlage. Der Zugang zu dem Gefahrenbereich erfolgt über eine Fördereinheit, welche vom Lichtvorhang überwacht wird.

Die Überwachungsfunktion des Lichtvorhangs soll dann derart ausgebildet sein, dass ein Passieren von sicherheitskritischen Objekten, insbesondere Personen, vom Lichtvorhang erfasst wird, sodass zur Vermeidung von Gefahrensituationen die Sicherheitsfunktion ausgelöst wird.

Zulässige Objekte, wie zum Beispiel Werkstücke oder Ladegüter, die der Maschine oder Anlage zur Durchführung von Arbeitsprozessen zugeführt werden müssen, sollen jedoch nicht zur Auslösung der Sicherheitsfunktion führen, um unnötige Stillstandszeiten der Anlage zu vermeiden.

Um dies zu erreichen ist für die Sensoranordnung in bekannter Weise eine Mutingfunktion vorgesehen.

Beispielsweise können dem Lichtvorhang in Förderrichtung der Fördereinheit Mutingsensoren vorgeordnet sein, mit denen zulässige Objekte erfasst werden. Ist dies der Fall, wird die Überwachungsfunktion des Lichtvorhangs für eine vorgegebenen Zeit gemutet, das heißt überbrückt, sodass die zulässigen Objekte den Lichtvorhang passieren können, ohne dass dieser ein Schaltsignal, das die Sicherheitsfunktion auslöst, generiert.

Eine weitere Ausgestaltung einer Mutingfunktion ist das sogenannte Smart Prozess Gating (SPG), das insbesondere im Sicherheits-Lichtvorhang MLC 530 SPG der Firma Leuze electronic GmbH + Co. KG verwirklicht ist. Bei diesem SPG wird ein erstes Steuersignal von einer Anlagensteuerung bereitgestellt, die insbesondere die Fördereinheit steuert. Dieses erste Steuersignal wird dann generiert, wenn sich ein zulässiges Objekt so dicht vor dem Lichtvorhang befindet, dass keine Person zwischen dem zulässigen Objekt und dem Lichtvorhang durchschlüpfen kann. Typischerweise beträgt der Abstand zwischen zulässigem Objekt und Lichtvorhang maximal 200 Millimeter. Ein zweites Steuersignal wird daraufhin vom Lichtvorhang selbst generiert, wenn dieser nach dem ersten Steuersignal einen Objekteingriff im Schutzfeld registriert.

Die Mutingfunktion wird nur dann aktiviert, wenn das erste Steuersignal innerhalb eines von einer Überbrückungseinrichtung überwachten ersten Zeitintervalls Δt₁ registriert wird. Die Überbrückung des Lichtvorhangs wird dann für eine vorgegebene Zeit aufrechterhalten, die so gewählt ist, dass nach Ablauf dieser Zeit das zulässige Objekt das Schutzfeld wieder verlassen hat. Die Mutingfunktion wird dann beendet, wenn innerhalb eines von der Überbrückungseinrichtung überwachten zweiten Zeitintervalle Δt₂ die Deaktivierung der beiden Steuersignale registriert wird.

Wird die Aktivierung des ersten und zweiten Steuersignals nicht innerhalb des ersten Zeitintervalls Δt₁ registriert, wird der Lichtvorhang in einen sicheren Verriegelungszustand versetzte, was zur Auslösung der Sicherheitsfunktion und damit zum Stillsetzen der Anlage führt. Entsprechendes gilt, wenn die Deaktivierung der Steuersignale nicht innerhalb des zweiten Zeitintervalls Δt₂ registriert wird.

Damit ist ein hohes Sicherheitsniveau bei der Absicherung der Anlage gewährleistet. Da jedoch sowohl bei Nichteinhalten der Anforderung einer Aktivierung der Steuersignale innerhalb des Zeitintervalls Δt₁ als auch bei Nichteinhalten der Anforderung einer Deaktivierung der Steuersignale innerhalb des Zeitintervalls Δt₂ der Lichtvorhang in einen sicheren Verriegelungszustand überführt wird und die Anlage dadurch stillgesetzt wird, wird dadurch die Verfügbarkeit der Anlage reduziert.

Die US 2008/0179504 A1 betrifft eine Überwachungseinrichtung mit einem Lichtvorhang. Der Lichtvorhang weist eine Anordnung von Sender-Empfänger-Paaren auf, mittels derer ein Überwachungsbereich überwacht wird. In einer Auswerteeinheit werden die Empfangssignale der Empfänger ausgewertet. In einem Normalbetrieb des Lichtvorhangs wird mit diesem eine Anlage derart überwacht, dass deren Betrieb freigegeben wird, wenn mit der Auswerteeinheit festgestellt wird, dass die Strahlachsen aller Sender-Empfänger-Paare frei sind. Wird die Unterbrechung wenigstens einer Strahlachse festgestellt, wird die Anlage stillgesetzt. Diese Überwachungsfunktion des Lichtvorhangs kann mit einer Muting-Einheit überbrückt werden. Die Muting-Einheit wertet Signale von Muting-Sensoren aus. Wird mit den Muting-Sensoren ein zulässiges Objekt erkannt, generieren die Muting-Sensoren ein Muting-Signal. In der Muting-Einheit wird geprüft, ob dieses Muting-Signal vorhanden ist und ob die Lichtwege aller Strahlachsen des Lichtvorhangs frei sind. Nur wenn diese beiden Bedingungen erfüllt sind, wird die Muting-Funktion aktiviert, d.h. der Lichtvorhang wird überbrückt. Die Überbrückung des Lichtvorhangs wird dann aufgehoben, wenn die Muting-Sensoren das zulässige Objekt nicht mehr detektieren.

Der Erfindung liegt die Aufgabe zugrunde, eine Überwachungseinrichtung bereitzustellen, mit der eine sichere Gefahrenbereichsüberwachung einer Anlage realisiert wird, ohne deren Verfügbarkeit unnötig einzuschränken.

Der Erfindung liegt die Aufgabe zugrunde, die Funktionalität und die Sicherheit bei Gefahrenbereichsüberwachungen für eine Sensoranordnung der eingangs genannten Art zu erhöhen.

Die Erfindung betrifft eine Überwachungseinrichtung zur Überwachung eines Gefahrenbereichs an einer Anlage, mit einem ein Schutzfeld überwachenden Sicherheitssensor. Der Sicherheitssensor generiert ein binäres Objektfeststellungssignal, welches den Schaltzustand "ein" einnimmt, wenn ein Objekt im Schutzfeld vorhanden ist. Mit dem Objektfeststellungssignal im Schaltzustand "ein" wird eine Sicherheitsfunktion für die Anlage ausgelöst. Weiterhin ist eine Überbrückungseinrichtung vorgesehen, welcher das Objektfeststellungssignal und ein binäres Schaltsignal mit Schaltzuständen "ein" und "aus" zugeführt sind. Mittels der Überbrückungseinrichtung ist ein Überbrückungszyklus, innerhalb dessen die Sicherheitsfunktion des Sicherheitssensors überbrückt ist, nur dann aktiviert, wenn innerhalb eines von der Überbrückungseinrichtung überwachten Zeitintervalls das Schaltsignal in den Schaltzustand "ein" und das Objektfeststellungssignal in den Schaltzustand "ein" wechselt. Die Überbrückung wird solange aufrechterhalten, bis sowohl das Schaltsignal als auch das Objektfeststellungssignal in dem Schaltzustand "aus" gewechselt sind, wobei die Zeitdifferenz dieser Signalwechsel beliebig ist und von der Überbrückungseinrichtung nicht überwacht wird.

Die Erfindung betrifft weiterhin ein Verfahren zum Betrieb einer Überwachungseinrichtung.

Mit dem Sicherheitssensor der erfindungsgemäßen Überwachungseinrichtung wird eine fehlersichere Überwachung eines Gefahrenbereichs einer Anlage gewährleistet. Mit dem Sicherheitssensor erfolgt dabei allgemein eine Überwachung eines Schutzfelds, das in Form einer Fläche oder eines Raumbereichs ausgebildet sein kann.

Dabei kann insbesondere der Sicherheitssensor ein Lichtvorhang, ein Flächendistanzsensor oder ein Kamerasensor sein.

Bevorzugt ist der Sicherheitssensor dabei als optischer Sensor ausgebildet. Insbesondere für den Fall, dass der Sicherheitssensor ein Flächendistanzsensor ist, kann dieser auch als Radarsensor ausgebildet sein.

Die Funktionsweise des Sicherheitssensors ist generell derart, dass dieser abhängig davon, ob im Schutzfeld ein Objekt registriert wird oder nicht, ein binäres Objektfeststellungssignal erzeugt. Insbesondere weist der Sicherheitssensor eine Auswerteeinheit auf, in der das Objektfeststellungssignal generiert wird, wobei das Objektfeststellungssignal über wenigstens einen Schaltausgang der Anlage zugeführt ist.

Wird im Normalbetrieb des Sicherheitssensors ein Objekt im Schutzfeld erkannt, wird insbesondere durch Abschalten des Schaltausgangs eine Sicherheitsfunktion ausgelöst, insbesondere die überwachte Anlage stillgesetzt.

Um unnötige Stillstandzeiten zu vermeiden, ist bei der erfindungsgemäßen Überwachungseinrichtung eine Überbrückungseinrichtung vorgesehen, die eine Überbrückung, das heißt ein Muting steuert. In einem Mutingbetrieb ist die Sicherheitsfunktion des Sicherheitssensors überbrückt, so dass ein Objekteingriff im Schutzfeld nicht zum Auslösen der Sicherheitsfunktion führt. Generell kann auch ein partielles Muting vorgesehen sein, bei dem nur ein Teil des Schutzfelds überbrückt wird.

Mit dem Muting wird erreicht, dass zulässige, nicht sicherheitskritische Objekte wie zum Beispiel Transportgüter der überwachten Anlage zugeführt werden können, ohne dass der Sicherheitssensor die Sicherheitsfunktion auslöst. Beispielsweise erfolgt die Zuführung von zulässigen Objekten mittels einer Fördereinheit.

Erfindungsgemäß steuert die Überbrückungseinrichtung die Mutingfunktion abhängig von dem Objektfeststellungssignal und einem Schaltsignal, das insbesondere von einer Steuereinheit eingelesen wird.

Dabei kann die Steuereinheit von einer die Anlage steuernden Anlagensteuerung gebildet sein.

Alternativ kann die Steuereinheit von der Steuerung der Fördereinheit gebildet sein.

Ein Überbrückungszyklus, das heißt, eine Überbrückung des Sicherheitssensors für eine bestimmte Zeit wird nur dann ausgelöst, wenn innerhalb eines von der Überwachungseinrichtung überwachten Zeitintervalls das Steuersignal und das Objektfeststellungssignal in den Schaltzustand "ein" wechseln.

Vorteilhaft wechselt dabei zunächst das Schaltsignal als Mutinganforderung in den Schaltzustand "ein" und dann innerhalb des Zeitintervalls, das typischerweise 4 Sekunden beträgt, das Objektfeststellungssignal als Muting-Bestätigung in den Schaltzustand "ein".

Das Schaltsignal wechselt dabei vorteilhaft dann in den Schaltzustand "ein", wenn ein zulässiges Objekt dicht vor dem Sicherheitssensor angeordnet ist, sodass keine Person mehr zwischen das zulässige Objekt und das Schutzfeld des Sicherheitssensors treten kann.

Wird diese Zeitbedingung nicht erfüllt, wird der Sicherheitssensor in einen sicheren Verriegelungszustand überführt und die Anlage stillgesetzt.

Damit ist ein sicheres Aktivieren eines Überbrückungszyklus gewährleistet, das heißt ein unkontrolliertes Muting, das zu Gefahrensituationen führen könnte, wird sicher vermieden.

Erfindungsgemäß wird die Überbrückung des Sicherheitssensors solange aufrechterhalten, bis sowohl das Objektfeststellungssignal als auch das Schaltsignal wieder in den Schaltzustand "aus" übergegangen sind.

Mit dem Übergang des Objektfeststellungssignals in den Schaltzustand "aus" wird signalisiert, dass sich kein Objekt mehr im Schutzfeld befindet. Insbesondere wird signalisiert, dass das zulässige Objekt das Schutzfeld verlassen hat. Damit ist die wesentliche Bedingung für die Aufhebung der Mutingfunktion erfüllt. Der Übergang des Schaltsignals in den Schaltzustand "aus" stellt die zweite Bedingung für die Aufhebung der Mutingfunktion dar.

Erfindungsgemäß können die Zeitpunkte der Übergänge der Schaltzustände des Schaltsignals und des Objektfeststellungssignals in den Schaltzustand "aus" beliebig zueinander liegen, wobei das Zeitintervall zwischen diesen Übergängen von der Überwachungseinrichtung auch nicht überwacht wird.

Dieses Beenden des Mutings ist hinreichend sicher, da durch das Objektfeststellungssignal im Schaltzustand "aus" sichergestellt ist, dass sich kein Objekt im Schutzfeld befindet und daher keine Gefahrensituation vorliegt.

Da dieses Zeitintervall von der Überbrückungseinrichtung nicht überwacht wird, wird dementsprechend auch kein Übergang des Sicherheitssensors in den sicheren Verriegelungszustand bei Nichterfüllung des Zeitintervalls herbeigeführt, das heißt es erfolgt kein Stillsetzen der Anlage. Damit wird die Verfügbarkeit der Anlage erhöht, ohne dass die Sicherheit der Gefahrenbereich-Absicherung gefahrbringend reduziert wird.

Gemäß einer vorteilhaften Weiterbildung der Erfindung weist die Überwachungseinrichtung Fehlerkontrollmittel für eine Fehlerkontrolle des Schaltsignals auf.

Damit wird die Fehlersicherheit der erfindungsgemäßen Überwachungseinrichtung weiter erhöht.

Der Sicherheitssensor weist bereits einen fehlersicheren Aufbau auf, der insbesondere durch eine fehlersichere Auswerteeinheit realisiert ist, beispielsweise in

Form zwei sich zyklisch überwachender Referenzeinheiten. Dasselbe gilt für die Überbrückungseinheit, die insbesondere in der Auswerteeinheit integriert ist.

Durch die Fehlerkontrolle des Schaltsignals wird weiterhin ein fehlersicheres Einlesen des Schaltsignals realisiert.

Insbesondere wird mit dem Fehlerkontrollmittel eine Kurzschlussüberwachung, und/oder eine Überwachung auf das Vorliegen von Stuck-At Fehlern und/oder eine Überwachung auf Vorliegen einer periodischen Schwingung des Schaltsignals durchgeführt.

Vorteilhaft wird bei Aufdecken eines Fehlers des Schaltsignals in der Überwachungseinrichtung kein Überbrückungszyklus aktiviert.

Damit wird vermieden, dass durch ein fehlerhaftes Schaltsignal der Sicherheitssensor überbrückt wird und so die Gefahrenbereich-Überwachung unkontrolliert außer Kraft gesetzt wird.

Die Sicherheit der Überwachungseinrichtung wird weiterhin dadurch noch erhöht, dass bei Aufdecken eines Fehlers des Schaltsignals in der Überbrückungseinheit der Sicherheitssensor in einen sicheren Verriegelungszustand überführt wird.

Gemäß einer vorteilhaften Ausführungsform wird ein neuer Überbrückungszyklus nur dann aktiviert, wenn der vorherige Überbrückungszyklus korrekt dadurch beendet wurde, dass in der Überwachungseinrichtung sowohl ein Wechsel des Schaltsignals in den Schaltzustand "aus" als auch ein Wechsel der Objektfeststellungssignal in den Schaltzustand "aus" registriert wurde.

Damit erfolgt nach jedem Überbrückungszyklus eine Kontrolle, ob dieser fehlerfrei beendet wurde, wodurch die Sicherheit der Überwachungseinrichtung weiter erhöht wird.

Die Erfindung wird im Folgenden anhand der Zeichnungen erläutert. Es zeigen:
- Figur 1:: Beispiel einer erfindungsgemäßen Überwachungseinrichtung als Zugangssicherung zu einem Gefahrenbereich einer Anlage.
- Figur 2:: Einzeldarstellung des Sicherheitssensors der Überwachungseinrichtung gemäß Figur 1.
- Figur 3a - c:: Zeitdiagramme für die Aktivierung und Deaktivierung der Mutingfunktion des Sicherheitssensors gemäß Figur 1.

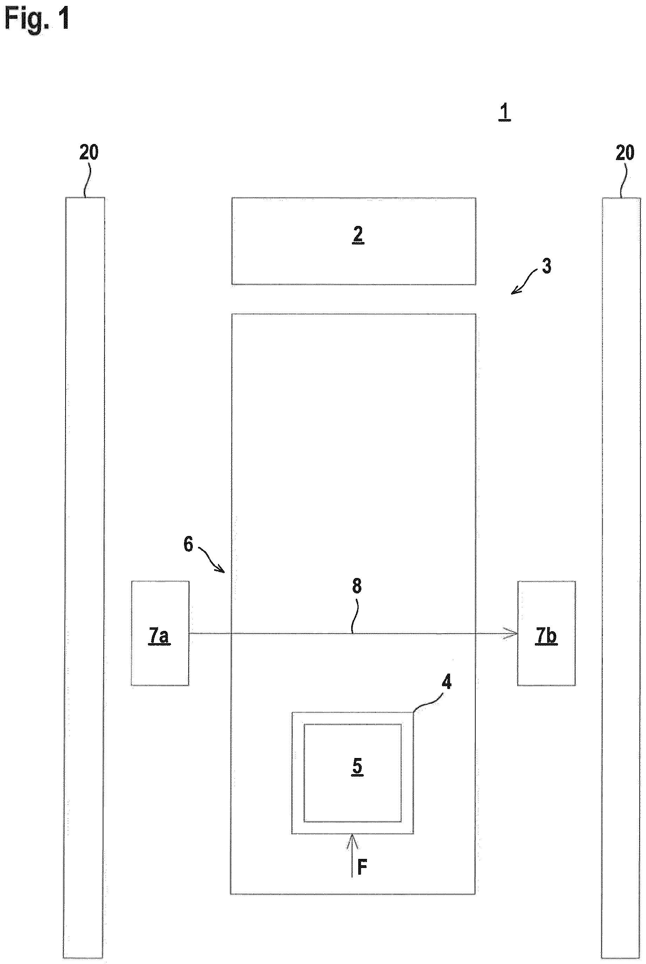

Figur 1 zeigt schematisch ein Beispiel der erfindungsgemäßen Überwachungseinrichtung 1. Die Überwachungseinrichtung 1 wird im vorliegenden Fall als Zugangssicherung für einen Gefahrenbereich an einer gefahrbringenden Anlage 2 eingesetzt. Der Zugang zum Gefahrenbereich erfolgt über eine Fördereinrichtung 3, deren Förderband in der mit F gekennzeichneten Bewegungsrichtung bewegt wird, um auf Paletten 4 angeordnete Transportgüter 5 in den Gefahrenbereich zu fördern. Natürlich können auf dieselbe Weise Transportgüter 5 aus dem Gefahrenbereich herausgeführt werden. Die Fördereinrichtung 3 ist durch seitlich angebrachte Umzäunungen 20 geschützt.

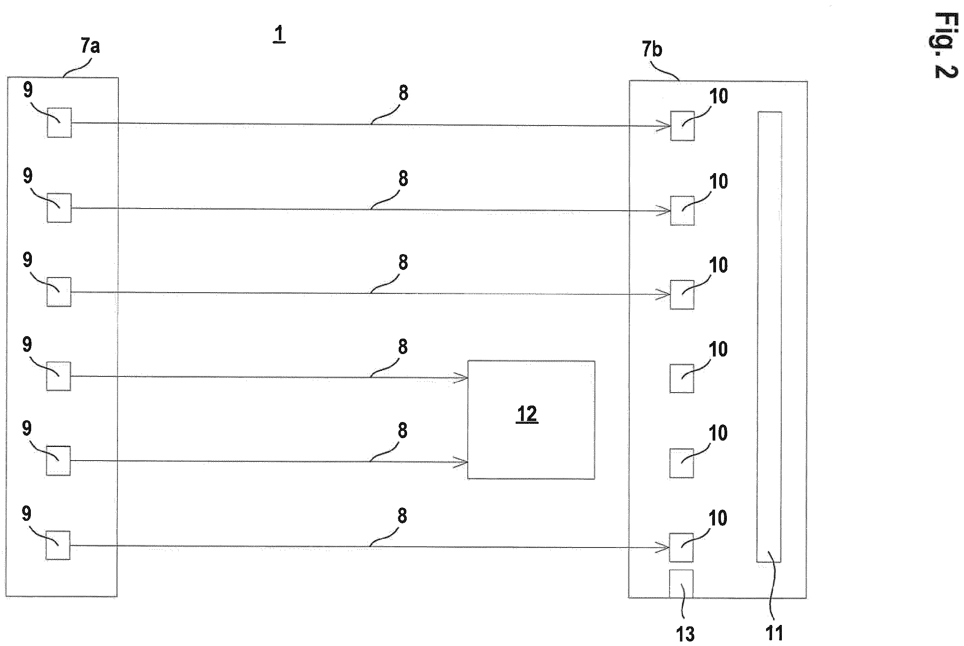

Die Überwachungseinrichtung 1 umfasst einen Sicherheitssensor 6 in Form eines optischen Sensors. Im vorliegenden Fall ist der Sicherheitssensor 6 als Lichtvorhang ausgebildet (Figur 2).

Der Lichtvorhang weist in einem ersten Gehäuse 7a eine Reihenanordnung von Lichtstrahlen 8 emittierenden Sendern 9 und in einem zweiten Gehäuse 7b eine Reihenanordnung von Empfängern 10 auf. Die Lichtstrahlen 8 definieren Strahlachsen des Lichtvorhangs und spannen ein flächiges Schutzfeld auf, das in einer vertikalen Ebene orientiert ist und damit senkrecht zur horizontalen Oberfläche des Förderbands der Fördereinrichtung 3 verläuft.

Die Sender 9 werden einzeln nacheinander zyklisch mittels einer nicht dargestellten Sendersteuerung aktiviert. Die Empfänger 10 werden in bekannter Weise optisch auf die Sender 9 synchronisiert. Jeder Sender 9 bildet mit dem zugeordneten Empfänger 10 eine Strahlachse des Lichtvorhangs aus.

Die in den Empfängern 10 generierten Empfangssignale werden in einer Auswerteeinheit 11 zur Generierung eines binären Objektfeststellungssignals ausgewertet. Die Schaltzustände "ein" beziehungsweise "aus" des Objektfeststellungssignals geben an, ob sich ein Objekt 12 im Schutzfeld befindet oder nicht. Bei freiem Schutzfeld treffen die Lichtstrahlen 8 aller Sender 9 ungehindert auf den zugeordneten Empfänger 10. Bei einem Objekteingriff im Schutzfeld werden durch das Objekt 12 die Lichtstrahlen 8 wenigstens eines Senders 9 unterbrochen. Zur Erfüllung der sicherheitstechnischen Anforderungen weist die Auswerteeinheit 11 einen redundanten, vorzugsweise zweikanaligen Aufbau auf.

Wird in einem Überwachungsbetrieb mit dem Sicherheitssensor 6 ein Objekteingriff im Schutzfeld registriert, wird durch das Objektfeststellungssignal eine Sicherheitsfunktion ausgelöst, insbesondere die gefahrbringende Anlage 2 stillgesetzt. Hierzu wird das Objektfeststellungssignal über einen Schaltausgang 13 an die Anlage 2 ausgegeben. Generell kann auch eine redundante Anordnung von Schaltausgängen vorgesehen sein.

Um ein unnötiges Stillsetzen der Anlage 2 zu vermeiden, kann der Sicherheitssensor 6 in Abhängigkeit gemutet, das heißt überbrückt werden, wenn ein zulässiges Objekt 12 wie zum Beispiel ein auf einer Platte 4 gelagertes Transportgut 5 das Schutzfeld des Sicherheitssensors 6 passiert. Durch die Überbrückung des Sicherheitssensors 6 löst dieser keine Sicherheitsfunktion aus, wenn das zulässige Objekt 12 das Schutzfeld passiert und das Transportgut 5 kann der Anlage 2 zugeführt werden, ohne dass diese stillgesetzt wird.

Die Steuerung des Mutings erfolgt in einer Überbrückungseinrichtung 1, die im vorliegenden Fall Bestandteil der Auswerteeinheit 11 des Sicherheitssensors 6 ist.

Die Steuerung des Mutings erfolgt abhängig von den Objektfeststellungssignalen des Sicherheitssensors 6 und von Schaltsignalen einer externen Steuereinheit, die beispielsweise von der Anlagensteuerung der Anlage 2 oder der Steuerung der Fördereinheit gebildet ist.

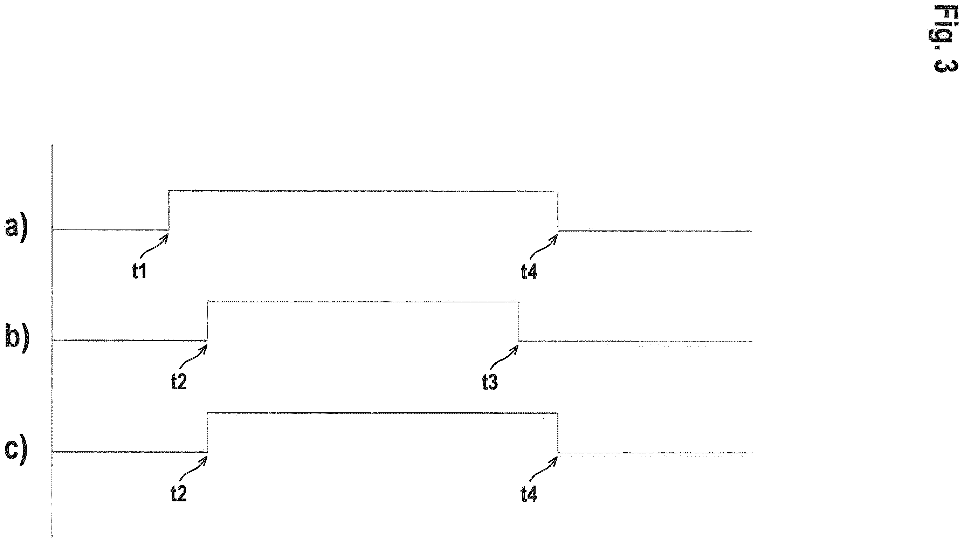

Die Steuerung des Mutings ist in den Figuren 3a - 3c dargestellt.

Figur 3a zeigt den zeitlichen Verlauf des Schaltsignals, das zwei Schaltzustände "aus", das heißt 0 und "ein", das heißt 1 einnehmen kann.

Figur 3b zeigt den zeitlichen Verlauf des Objektfeststellungssignals, das zwei Schaltzustände "aus", das heißt 0 und "ein", das heißt 1 einnehmen kann.

Figur 3c zeigt mit dem Mutingsignal den zeitlichen Verlauf des Muting-Zustands. Im Zustand 0 des Mutingsignals ist das Muting deaktiviert. Im Zustand 1 des Mutingsignals ist das Muting aktiviert.

Damit ein zulässiges Objekt 12 den Sicherheitssensor 6 passieren kann, wird kurz bevor das zulässige Objekt 12 das Schutzfeld des Sicherheitssensors 6 erreicht, das Schaltsignal in dem Schaltzustand "ein" versetzt (t₁ in Figur 3a).

Sobald das zulässige Objekt 12 in das Schutzfeld des Sicherheitssensors 6 eindringt, wird es von diesem erfasst und das Objektfeststellungssignal wechselt in den Schaltzustand "ein" (t₂ in Figur 3b).

In der Überbrückungseinrichtung 1 wird die Zeitdifferenz zwischen t₁ und t₂ überwacht. Liegt die Zeitdifferenz t₂ - t₁ innerhalb eines in der Überwachungseinrichtung 1 vorgegebenen Zeitintervalls Δt wird ein Überbrückungszyklus, das heißt ein Muting aktiviert, das heißt das Mutingsignal wechselt vom Zustand 0 auf den Zustand 1 (t₂ in Figur 3c).

Liegt jedoch die Zeitdifferenz t₂ - ₜ1 außerhalb des Zeitintervalls Δt wird der Sicherheitssensor 6 in einen sicheren Verriegelungszustand überführt, das heißt der oder die Schaltausgänge werden abgeschaltet, so dass die Sicherheitsfunktion ausgelöst wird und die Anlage 2 stillgesetzt wird.

Das Muting bleibt aktiviert, solange das zulässige Objekt 12 das Schutzfeld passiert, das heißt es wird keine Sicherheitsfunktion ausgelöst, die die Anlage 2 still setzt.

Zum Zeitpunkt t₃ (Figur 3b) verlässt das zulässige Objekt 12 das Schutzfeld des Sicherheitssensors 6, so dass das Objektfeststellungssignal vom Schaltzustand "ein" in den Schaltzustand "aus" wechselt.

Sobald auch das Schaltsignal in den Schaltzustand "aus" wechselt, wird der Überbrückungszyklus beendet, das Mutingsignal wechselt in den Zustand 0 (t₄ in den Figuren 3b, 3c).

Erfindungsgemäß ist die Bedingung für das Beenden des Überbrückungszyklus, dass sowohl das Objektfeststellungssignal als auch das Schaltsignal in den Schaltzustand "aus" wechseln. Die Zeitdifferenz dieser Signalwechsel, hier t₄ - t₃, wird in der Überbrückungseinheit 1 nicht überwacht und ist daher beliebig.

Allerdings wird in der Überbrückungseinheit1 überwacht, ob ein Überbrückungszyklus korrekt beendet wurde, in dem geprüft wird, ob sowohl das Objektfeststellungssignal als auch das Schaltsignal in den Schaltzustand "aus" gewechselt sind. Nur wenn dies der Fall ist, kann ein neuer Überbrückungszyklus gestartet werden.

Vorteilhaft weist die Überbrückungseinheit 1 Fehlerkontrollmittel für eine Fehlerkontrolle des Schaltsignals auf.

Dabei erfolgen mehrere Fehlerkontrollen. Zunächst erfolgt eine Kurzschlussüberwachung derart, ob ein Kurzschluss des Eingangs, über welchen das Schaltsignal in die Überbrückungseinrichtung 1, das heißt die Auswerteeinheit 11 des Sicherheitssensors 6 eingelesen wird, mit weiteren Eingängen oder Ausgängen des Sicherheitssensors 6 vorliegt. Hierzu kann eine geeignete Testschaltung in der Überwachungseinrichtung 1 integriert sein.

Weiterhin wird das Schaltsignal auf Stuck-At Fehler geprüft, das heißt ob am Eingang, über welchen das Schaltsignal eingelesen wird, ein Fehler derart vorliegt, dass sich dort das Signal nicht mehr ändert. Dies kann beispielsweise über Testpulse, die von der Überbrückungseinrichtung 1 auf den Eingang ausgegeben werden und die Überbrückungseinrichtung rückgelesen werden, getestet werden.

Schließlich wird geprüft, ob ein Fehler derart vorliegt, ob dem Schaltsignal periodische Schwingungen überlagert sind, was durch eine entsprechende Signalanalyse in der Überbrückungseinrichtung erfolgen kann.

Dann wird bei Aufdecken eines Fehlers des Schaltsignals in der Überwachungseinrichtung 1 kein Überbrückungszyklus aktiviert.

Weiterhin wird bei Aufdecken eines Fehlers des Schaltsignals in der Überwachungseinrichtung 1 der Sicherheitssensor 6 in einen sicheren Verriegelungszustand überführt.

### Bezugszeichenliste

- (1): Überwachungseinrichtung
- (2): Anlage
- (3): Fördereinrichtung
- (4): Palette
- (5): Transportgut
- (6): Sicherheitssensor
- (7a): erstes Gehäuse
- (7b): zweites Gehäuse
- (8): Lichtstrahl
- (9): Sender
- (10): Empfänger
- (11): Auswerteeinheit
- (12): Objekt
- (13): Schaltausgang
- (20): Umzäunung

## Patentansprüche

1. Überwachungseinrichtung (1) zur Überwachung eines Gefahrenbereichs an einer Anlage (2), mit einem ein Schutzfeld überwachenden Sicherheitssensor (6), wobei der Sicherheitssensor (6) ein binäres Objektfeststellungssignal generiert, welches den Schaltzustand "aus" einnimmt, wenn kein Objekt (12) im Schutzfeld vorhanden ist, und welches den Schaltzustand "ein" einnimmt, wenn ein Objekt im Schutzfeld vorhanden ist, wobei mit dem Objektfeststellungssignal im Schaltzustand "ein" eine Sicherheitsfunktion für die Anlage (2) ausgelöst wird, und mit einer Überbrückungseinrichtung, welcher das Objektfeststellungssignal und ein binäres Schaltsignal mit Schaltzuständen "ein" und "aus" zugeführt sind, wobei mittels der Überbrückungseinrichtung (1) ein Überbrückungszyklus, innerhalb dessen die Sicherheitsfunktion des Sicherheitssensors (6) überbrückt ist, nur dann aktiviert wird, wenn innerhalb eines von der Überbrückungseinrichtung überwachten Zeitintervalls das Schaltsignal in den Schaltzustand "ein" und das Objektfeststellungssignal in den Schaltzustand "ein" wechselt, **dadurch gekennzeichnet, dass** die Überbrückung solange aufrecht erhalten wird, bis sowohl das Schaltsignal als auch das Objektfeststellungssignal in den Schaltzustand "aus" gewechselt ist, wobei die Zeitdifferenz dieser Signalwechsel beliebig ist und von der Überbrückungseinrichtung nicht überwacht wird.

2. Überwachungseinrichtung (1) nach Anspruch 1, **dadurch gekennzeichnet, dass** der Sicherheitssensor (6) eine Auswerteeinheit (11) aufweist, in der das Objektfeststellungssignal generiert wird, wobei das Objektfeststellungssignal über wenigstens einen Schaltausgang (13) der Anlage (2) zugeführt ist.

3. Überwachungseinrichtung (1) nach Anspruch 2, **dadurch gekennzeichnet, dass** die Auswerteeinheit (11) die Überbrückungseinrichtung bildet.

4. Überwachungseinrichtung (1) nach einem der Ansprüche 1 - 3, **dadurch gekennzeichnet, dass** das Schaltsignal in einer Steuereinheit generiert wird.

5. Überwachungseinrichtung (1) nach Anspruch 4, **dadurch gekennzeichnet, dass** die Steuereinheit von einer die Anlage (2) steuernden Anlagensteuerung gebildet ist.

6. Überwachungseinrichtung (1) nach Anspruch 4, **dadurch gekennzeichnet, dass** die Steuereinheit von einer eine Fördereinheit steuernden Steuerung gebildet ist, wobei mittels der Fördereinheit zulässige Objekte (12) der Anlage (2) zugeführt sind.

7. Überwachungseinrichtung (1) nach Anspruch 6, **dadurch gekennzeichnet, dass** mit dem Sicherheitssensor (6) auf der Fördereinheit vorhandene Objekte (12) detektiert werden, und dass der Sicherheitssensor (6) überbrückt ist, während ein zulässiges Objekt (12) das Schutzfeld des Sicherheitssensors (6) passiert.

8. Überwachungseinrichtung (1) nach einem der Ansprüche 1 - 7, **dadurch gekennzeichnet, dass** der Sicherheitssensor (6) ein Lichtvorhang, ein Flächendistanzsensor oder ein Kamerasensor ist.

9. Überwachungseinrichtung (1) nach einem der Ansprüche 1 - 8, **dadurch gekennzeichnet, dass** die Überwachungseinrichtung (1) Fehlerkontrollmittel für eine Fehlerkontrolle des Schaltsignals aufweist.

10. Überwachungseinrichtung (1) nach Anspruch 9, **dadurch gekennzeichnet, dass** mit den Fehlerkontrollmitteln eine Kurzschlussüberwachung und/oder eine Überwachung auf das Vorliegen von Stuck-At Fehlern und/oder eine Überwachung auf Vorliegen einer periodischen Schwingung des Schaltsignals durchgeführt wird.

11. Überwachungseinrichtung (1) nach einem der Ansprüche 1 - 10, **dadurch gekennzeichnet, dass** für den Fall, dass das Objektfeststellungssignal und das Schaltsignal nicht innerhalb des von der Überbrückungseinrichtung überwachten Zeitintervalls in den Schaltzustand "ein" wechseln, der Sicherheitssensor (6) in einen sicheren Verriegelungszustand überführt wird.

12. Überwachungseinrichtung (1) nach einem der Ansprüche 1 - 11, **dadurch gekennzeichnet, dass** bei Aufdecken eines Fehlers des Schaltsignals in der Überbrückungseinrichtung kein Überbrückungszyklus aktiviert wird.

13. Überwachungseinrichtung (1) nach einem der Ansprüche 1 - 12, **dadurch gekennzeichnet, dass** bei Aufdecken eines Fehlers des Schaltsignals in der Überbrückungseinrichtung der Sicherheitssensor (6) in einen sicheren Verriegelungszustand überführt wird.

14. Überwachungseinrichtung (1) nach einem der Ansprüche 1 - 13, **dadurch gekennzeichnet, dass** ein neuer Überbrückungszyklus nur dann aktiviert wird, wenn der vorherige Überbrückungszyklus korrekt dadurch beendet wurde, dass in der Überbrückungseinrichtung sowohl ein Wechsel des Schaltsignals in den Schaltzustand "aus" als auch ein Wechsel des Objektfeststellungssignals in den Schaltzustand "aus" registriert wurde.

15. Verfahren zum Betrieb einer Überwachungseinrichtung (1) zur Überwachung eines Gefahrenbereichs an einer Anlage (2), mit einem ein Schutzfeld überwachenden Sicherheitssensor (6), wobei der Sicherheitssensor (6) ein binäres Objektfeststellungssignal generiert, welches den Schaltzustand "aus" einnimmt, wenn kein Objekt (12) im Schutzfeld vorhanden ist, und welches den Schaltzustand "ein" einnimmt, wenn ein Objekt im Schutzfeld vorhanden ist, wobei mit dem Objektfeststellungssignal im Schaltzustand "ein" eine Sicherheitsfunktion für die Anlage (2) ausgelöst wird, und mit einer Überbrückungseinrichtung welcher das Objektfeststellungssignal und ein binäres Schaltsignal mit Schaltzuständen "ein" und "aus" zugeführt sind, wobei mittels der Überwachungseinrichtung (1) ein Überbrückungszyklus, innerhalb dessen die Sicherheitsfunktion des Sicherheitssensors (6) überbrückt ist, nur dann aktiviert wird, wenn innerhalb eines von der Überbrückungseinheit überwachten Zeitintervalls das Schaltsignal in den Schaltzustand "ein" und das Objektfeststellungssignal in den Schaltzustand "ein" wechselt, **dadurch gekennzeichnet, dass** die Überbrückung solange aufrecht erhalten wird, bis sowohl das Schaltsignal als auch das Objektfeststellungssignal in den Schaltzustand "aus" gewechselt ist, wobei die Zeitdifferenz dieser Signalwechsel beliebig ist und von der Überbrückungseinheit nicht überwacht wird.

## Claims

1. A monitoring device (1) for monitoring a hazardous area on a system (2), having a safety sensor (6) which monitors a protective field, the safety sensor (6) generating a binary object detection signal which assumes the switching state "off" if no object (12) is present in the protective field and which assumes the switching state "on", if an object is present in the protective field, a safety function for the installation (2) being triggered with the object detection signal in the "on" switching state, and with an override device to which the object detection signal and a binary switching signal with "on" and "off" switching states are fed, wherein, by means of the bridging device (1), a bridging cycle, within which the safety function of the safety sensor (6) is bridged, is only activated if, within a time interval monitored by the bridging device, the switching signal changes to the "on" switching state and the object detection signal changes to the "on" switching state, **characterised in that** the bridging is maintained until both the switching signal and the object detection signal have changed to the "off" switching state, the time difference between these signal changes being arbitrary and not being monitored by the bridging device.

2. A monitoring device (1) according to claim 1, **characterised in that** the safety sensor (6) has an evaluation unit (11) in which the object detection signal is generated, the object detection signal being fed to the system (2) via at least one switching output (13).

3. A monitoring device (1) according to claim 2, **characterised in that** the evaluation unit (11) forms the bridging device.

4. A monitoring device (1) according to one of the claims 1 to 3, **characterised in that** the switching signal is generated in a control unit.

5. A monitoring device (1) according to claim 4, **characterised in that** the control unit is formed by a plant control system controlling the plant (2).

6. A monitoring device (1) according to claim 4, **characterised in that** the control unit is formed by a control system controlling a conveyor unit, wherein permissible objects (12) are fed to the system (2) by means of the conveyor unit.

7. A monitoring device (1) according to claim 6, **characterised in that** objects (12) present on the conveyor unit are detected by the safety sensor (6), and **in that** the safety sensor (6) is bridged while a permissible object (12) passes the protective field of the safety sensor (6).

8. A monitoring device (1) according to one of the claims 1 to 7, **characterised in that** the safety sensor (6) is a light curtain, an area distance sensor or a camera sensor.

9. A monitoring device (1) according to one of claims 1 to 8, **characterised in that** the monitoring device (1) has error control means for error control of the switching signal.

10. A monitoring device (1) according to claim 9, **characterised in that** the error control means are used to carry out a short-circuit monitoring and/or a monitoring for the presence of stuck-at faults and/or a monitoring for the presence of a periodic oscillation of the switching signal.

11. A monitoring device (1) according to one of the claims 1 to 10, **characterised in that** in the event that the object detection signal and the switching signal do not change to the switching state "on" within the time interval monitored by the bridging device, the safety sensor (6) is transferred to a safe locking state.

12. A monitoring device (1) according to one of the claims 1 to 11, **characterised in that** no override cycle is activated when an error of the switching signal in the override device is detected.

13. A monitoring device (1) according to one of the claims 1 to 12, **characterised in that** when an error of the switching signal is detected in the bypass device, the safety sensor (6) is transferred to a safe locking state.

14. A monitoring device (1) according to one of the claims 1 to 13, **characterised in that** a new override cycle is only activated if the previous override cycle was correctly terminated by registering in the override device both a change of the switching signal to the switching state "off" and a change of the object detection signal to the switching state "off".

15. A method for operating a monitoring device (1) for monitoring a hazardous area on a system (2), having a safety sensor (6) which monitors a protective field, the safety sensor (6) generating a binary object detection signal which assumes the switching state "off" if no object (12) is present in the protective field, and which assumes the switching state "on" if an object is present in the protective field, wherein a safety function for the installation (2) is triggered with the object detection signal in the switching state "on", and with a bridging device to which the object detection signal and a binary switching signal with switching states "on" and "off" are supplied, wherein by means of the monitoring device (1) an override cycle, within which the safety function of the safety sensor (6) is overridden, is only activated if within a time interval monitored by the override unit the switching signal changes to the "on" switching state and the object detection signal changes to the "on" switching state, **characterised in that** the bypass is maintained until both the switching signal and the object detection signal have changed to the "off" switching state, the time difference between these signal changes being arbitrary and not being monitored by the bypass unit.

## Revendications

1. Dispositif de surveillance (1) pour la surveillance d'une zone dangereuse sur une installation (2), comportant un capteur de sécurité (6) qui surveille un champ de protection, le capteur de sécurité (6) générant un signal binaire de détection d'objet qui prend l'état de commutation "arrêt" si aucun objet (12) n'est présent dans le champ de protection et qui prend l'état de commutation "marche", si un objet est présent dans le champ de protection, une fonction de sécurité pour l'installation (2) est déclenchée avec le signal de détection d'objet dans l'état de commutation "marche", et avec un dispositif de neutralisation auquel le signal de détection d'objet et un signal de commutation binaire avec les états de commutation "marche" et "arrêt" sont envoyés, dans lequel, au moyen du dispositif de pontage (1), un cycle de pontage, dans lequel la fonction de sécurité du capteur de sécurité (6) est pontée, n'est activé que si, dans un intervalle de temps surveillé par le dispositif de pontage, le signal de commutation passe à l'état de commutation "marche" et le signal de détection d'objet passe à l'état de commutation "marche", **caractérisé en ce que** le pontage est maintenu jusqu'à ce que le signal de commutation et le signal de détection d'objet soient tous deux passés à l'état de commutation "arrêt", la différence de temps entre ces changements de signaux étant arbitraire et n'étant pas surveillée par le dispositif de pontage.

2. Dispositif de surveillance (1) selon la revendication 1, **caractérisé par le fait que** le capteur de sécurité (6) possède une unité d'évaluation (11) dans laquelle le signal de détection d'objet est généré, le signal de détection d'objet étant transmis au système (2) par l'intermédiaire d'au moins une sortie de commutation (13).

3. Dispositif de surveillance (1) selon la revendication 2, **caractérisé par le fait que** l'unité d'évaluation (11) constitue le dispositif de pontage.

4. Dispositif de surveillance (1) selon l'une des revendications 1 à 3, **caractérisé en ce que** le signal de commutation est généré dans une unité de commande.

5. Dispositif de surveillance (1) selon la revendication 4, **caractérisé en ce que** l'unité de commande est formée par un système de commande de l'installation pour commander l'installation (2).

6. Dispositif de surveillance (1) selon la revendication 4, **caractérisé en ce que** l'unité de commande est formée par un système de commande d'une unité de convoyage, les objets autorisés (12) étant acheminés vers l'installation (2) au moyen de l'unité de convoyage.

7. Dispositif de surveillance (1) selon la revendication 6, **caractérisé en ce que** les objets (12) présents sur l'unité de transport sont détectés par le capteur de sécurité (6), et **en ce que** le capteur de sécurité (6) est ponté lorsqu'un objet autorisé (12) passe le champ de protection du capteur de sécurité (6).

8. Dispositif de surveillance (1) selon l'une des revendications 1 à 7, **caractérisé par le fait que** le capteur de sécurité (6) est un rideau lumineux, un capteur de distance de zone ou un capteur de caméra.

9. Dispositif de surveillance (1) selon l'une des revendications 1 à 8, **caractérisé en ce que** le dispositif de surveillance (1) possède des moyens de contrôle d'erreur pour le contrôle d'erreur du signal de commutation.

10. Dispositif de surveillance (1) selon la revendication 9, **caractérisé en ce que** les moyens de contrôle d'erreur sont utilisés pour effectuer une surveillance des courts-circuits et/ou une surveillance de la présence de défauts de blocage et/ou une surveillance de la présence d'une oscillation périodique du signal de commutation.

11. Dispositif de surveillance (1) selon l'une des revendications 1 à 10, **caractérisé en ce que** si le signal de détection d'objet et le signal de commutation ne passent pas à l'état de commutation "marche" dans l'intervalle de temps surveillé par le dispositif de pontage, le capteur de sécurité (6) est transféré dans un état de verrouillage sûr.

12. Dispositif de surveillance (1) selon l'une des revendications 1 à 11, **caractérisé par le fait qu'**aucun cycle de neutralisation n'est activé lorsqu'une erreur du signal de commutation dans le dispositif de neutralisation est détectée.

13. Dispositif de surveillance (1) selon l'une des revendications 1 à 12, **caractérisé par le fait que** lorsqu'une erreur du signal de commutation est détectée dans le dispositif de contournement, le capteur de sécurité (6) est transféré à un état de verrouillage sûr.

14. Dispositif de surveillance (1) selon l'une des revendications 1 à 13, **caractérisé en ce qu'**un nouveau cycle de contournement n'est activé que si le cycle de contournement précédent a été correctement terminé en enregistrant dans le dispositif de contournement à la fois un changement du signal de commutation à l'état de commutation "arrêt" et un changement du signal de détection d'objet à l'état de commutation "arrêt".

15. Procédé de fonctionnement d'un dispositif de surveillance (1) d'une zone dangereuse sur un système (2) comportant un capteur de sécurité (6) qui surveille un champ de protection, le capteur de sécurité (6) générant un signal binaire de détection d'objet qui passe à l'état de commutation "arrêt" si aucun objet (12) n'est présent dans le champ de protection, et qui passe à l'état de commutation "arrêt" si un objet (12) est présent dans le champ de protection, et qui passe à l'état de commutation "arrêt", dans lequel une fonction de sécurité pour l'installation (2) est déclenchée avec le signal de détection d'objet dans l'état de commutation "marche", et avec un dispositif de pontage auquel le signal de détection d'objet et un signal de commutation binaire avec les états de commutation "marche" et "arrêt" sont fournis, dans lequel, au moyen du dispositif de surveillance (1), un cycle de neutralisation, au cours duquel la fonction de sécurité du capteur de sécurité (6) est neutralisée, n'est activé que si, dans un intervalle de temps surveillé par l'unité de neutralisation, le signal de commutation passe à l'état de commutation "marche" et le signal de détection d'objet à l'état de commutation "marche", **caractérisé par le fait que** la dérivation est maintenue jusqu'à ce que le signal de commutation et le signal de détection d'objet soient passés à l'état de commutation "arrêt", la différence de temps entre ces changements de signaux étant arbitraire et n'étant pas surveillée par l'unité de dérivation.
